# EUROPEAN PATENT APPLICATION

(11) **EP 4 773 454 A1**
(43) Date of publication of application: **08.07.2026**
(21) Application number: 26150013.6
(22) Date of filing: 02.01.2026
(51) Int. Cl.: H02H 9/02, H02H 9/00, H02H 9/04

(54) **ACTIVE INDIRECT LIGHTNING PROTECTION**

(30) Priority: 07.01.2025 IN 202511001404; 14.04.2025 US 202519178634
(71) Applicant: Honeywell International Inc., Charlotte, NC 28202 (US)
(72) Inventor: SATYANARAYANA, Narasimha Murthy, Charlotte, 28202 (US); HEGDE, Adarsh Kumar, Charlotte, 28202 (US)
(74) Representative: Haseltine Lake Kempner LLP

(57) **Abstract**

An active lightning protection circuit includes a lightning sense circuit, an impedance control circuit connected to the lightning sense circuit, a transient current cut-off circuit, and a drive and monitor circuit. The lightning sense circuit is operable to sense a current level at a connector port of a device. The impedance control circuit is operable to, based on a first current level sensed by the lightning sense circuit indicative of normal conditions, turn ON to present a low impedance path for current flowing towards one or more protected components of the device. The drive and monitor circuit is operable to, based on a second current level sensed at the connector port indicative of a transient, turn OFF the impedance control circuit and turn ON the transient current cut-off circuit to present a high impedance path for the current flowing towards the one or more protected components.

## Description

This application claims the benefit of Indian Provisional Patent Application No. 202511001404, filed January 7, 2025 and entitled "ACTIVE INDIRECT LIGHTNING PROTECTION," the entire contents of which is incorporated herein by reference.

### TECHNICAL FIELD

The disclosure relates to protecting devices from lightning transients.

### BACKGROUND

Computing devices may include external connectors to communicate with the other systems. These devices may have communication interfaces such as serial communication interfaces (e.g., RS422, RS485, RS232, etc.), discrete out interfaces, sensor interfaces, Ethernet ports, and the like, that are susceptible to electrical surges caused by environmental factors like lightning strikes. While a direct lightning strike can cause catastrophic damage to physical hardware, the indirect effects of lightning, such as electrical surges and transients induced by lightning strikes at a distance, can also introduce significant risks to sensitive electronics. These effects can travel through various conductive paths, including power lines, communication cables, or even nearby electromagnetic fields, and manifest as high-energy electrical surges at the device's ports.

A transient generated by an indirect lightning strike can significantly exceed the safe operating limits of the device, often reaching several hundred volts and/or amps, and in some cases, even higher. Without proper protection, these transients can lead to the breakdown of critical components, resulting in data loss, equipment malfunction, or complete failure of the device.

An existing techniques for protecting such a lower voltage operating devices from the indirect effects of lightning uses high wattage Transient Voltage Suppressor (TVS) diodes, capacitors, signal diodes along with thick wide traces to protect the devices which operate at much lower voltage levels. The TVS diodes are designed to divert excess current during transient events in order to clamp high voltage surges to a safe level in order to prevent overvoltage conditions from damaging the device. The high wattage diodes help absorb and dissipate the large amounts of energy associated with lightning-induced surges and help to reduce the junction capacitance of the TVS diodes, while the capacitors act to filter out high frequency noise or spikes.

### SUMMARY

In general, this disclosure describes an active lightning protection circuit that protects components of a computing device from transients that may result from indirect effects of lightning. Such transients may cause spikes in the voltage and current experienced by the computing device. The active lightning protection circuit includes active components that protect computing devices from positive and negative transients.

The active lightning protection circuit may connect to and be situated between a connector port of the device and components that the active lightning protection circuit may protect from transients at the connector port. In normal operation, the active lightning protection circuit provides a low impedance path between the connector port of the device and the protected components of the device. When the active lightning protection circuit senses a transient at the connector port, the active lightning protection circuit uses active components, such as transistors, to switch off the low impedance path and to switch on a high impedance path between the connector port of the device and the protected components of the device. The high impedance path may use components such as resistors and Zener diodes to suppress the transient to provide a safe level of voltage to the protected components of the device, thereby preventing overvoltage and overcurrent conditions from damaging the protected components of the device.

The techniques of this disclosure provides certain technical advantages. The active lightning protection circuit protects components of a device from damage due to overvoltage/overcurrent conditions. A device that uses an active lightning protection circuit to protect components from damage due to overvoltage and overcurrent conditions may not have to be designed to safely handle large current pulses associated with such transients, such as by designing printed circuit boards to have thick and wide (e.g., 40-50 mil) electrical traces, which may increase the size, complexity of the Printed Circuit Board. Thus, use of an active lightning protection circuit to protect devices from damage due to overvoltage conditions may enable such devices to be smaller, have less complex designs, and allow for faster communication speeds.

In some aspects, the techniques described herein relate to an active lightning protection circuit for protecting a device, the active lightning protection circuit including: a lightning sense circuit operable to sense a current level at a connector port of a device; an impedance control circuit connected to the lightning sense circuit, wherein the impedance control circuit is operable to, based on a first current level sensed by the lightning sense circuit indicative of normal conditions, turn ON to present a low impedance path for current flowing towards one or more protected components of the device; a transient current cut-off circuit operable to present a high impedance path for the current flowing towards the one or more protected components; and a drive and monitor circuit operable to, based on a second current level sensed by the lightning sense circuit indicative of a transient, turn ON, wherein turning ON the drive and monitor circuit turns OFF the impedance control circuit and turns ON the transient current cut-off circuit to present a high impedance path for the current flowing towards the one or more protected components.

In some aspects, the techniques described herein relate to a method including: sensing, by a lightning sense circuit of an active lightning protection circuit, a current level at a connector port of a device; based on a first current level sensed by the lightning sense circuit indicative of normal conditions, turning ON an impedance control circuit of the active lightning protection circuit to present a low impedance path for current flowing towards one or more protected components the device; and based on a second current level sensed by the lightning sense circuit indicative of a transient, turning OFF, by a drive and monitor circuit of the active lightning protection circuit, the impedance control circuit and turning ON, by the drive and monitor circuit, a transient current cut-off circuit of the active lightning protection circuit to present a high impedance path for the current flowing towards the one or more protected components.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIGS. 1A-1B are block diagrams of an example system that includes an active lightning protection circuit.
FIG. 2 is a circuit diagram of an active lightning protection circuit.
FIG. 3A-3C illustrate handling of lightning transients by a lightning protection circuit.
FIG. 4 is a flow chart illustrating example operations of an active lightning protection circuit.

### DETAILED DESCRIPTION

In general, this disclosure describes an active lightning protection circuit that protects components of a computing device from transients that may result from lightning strikes and indirect effects of lightning. The active lightning protection circuit includes active components that protect computing devices from positive and negative transients.

Connector ports of a computing device, such as Ethernet ports or other external interfaces, are often connected to longer cables that can act as antennas, capturing transient energy from nearby lightning strikes or power surges. These transients then reach the computing device through the connector port. Such transients may include positive transients and negative transients. A positive transient is a brief sharp spike in voltage. Positive transients may force excessive current into the computing device, which may raise the voltage to unsafe levels. A negative transient, also referred to as a negative transient, is a brief sharp dip in voltage. Negative transients may pull the voltage lower than ground or the expected operating voltage, and may create reverse currents that can damage components of the computing device. Such positive and negative transients may be very brief, lasting from a tens of microseconds to hundreds of microseconds, may carry hundreds of amperes of current, and may range from a few volts to hundreds or thousands of volts.

One technique for handling lightning transients includes designing computing devices to withstand such transients with minimal damage. For example, printed circuit boards of such computing devices can be designed to have thick and wide (e.g., 40-50 mil for 0.5 ounce to 1 ounce of thickness) electrical traces. However, such wide traces may increase the size of printed circuit boards or may cause designers to increase the number of layers in the printed circuit board or the number of printed circuit boards in computing devices, which may increase the size, complexity and have a negative impact on the characteristics of the interface. Further, even with wide electrical traces, the high level of current induced by lightning transients may still damage adjacent electronic components, disrupt communications, and cause other issues.

Another technique for handling lightning transients, which may be combined with printed circuit boards having thick and wide traces, includes using passive components such as high wattage Transient Voltage Suppressor (TVS) diodes, signal diodes (to reduce junction capacitance of high wattage TVSs), and capacitors to protect components of computing devices from lightning transients. However, using such diodes and capacitors may lead to an increase in size and an increase in trace thickness and width, which increases board complexity due to multiple protection components.

In accordance with aspects of this disclosure, a computing device may use an active lightning protection circuit to protect components from damage caused by transients at the connector port. The active lightning protection circuit may connect to and be situated between the connector port of the computing device and components of the computing device that are to be protected. In normal operation, the active lightning protection circuit provides a low impedance path between the connector port of the device and the protected components of the computing device. When the active lightning protection circuit senses a lightning transient at the connector port, the active lightning protection circuit may use active components, such as transistors, to switch off the low impedance path and to switch on a high impedance path between the connector port of the computing device and the protected components of the computing device. The high impedance path may use components such as resistors and Zener diodes to suppress the transient to provide a safe level of voltage and current to the protected components of the computing device, thereby preventing overvoltage and overcurrent conditions from damaging the protected components of the computing device.

The techniques of this disclosure provides certain technical advantages. The active lightning protection circuit protects components of a device from damage due to overvoltage and overcurrent conditions. A device that uses an active lightning protection circuit to protect components from damage due to overvoltage and overcurrent conditions may not have to be designed to safely handle large current pulses associated with such transients, such as by designing printed circuit boards to have wide (e.g., 40-50 mil) electrical traces, which may increase the size, complexity, and power usage of the devices. Thus, use of an active lightning protection circuit to protect devices from damage due to overvoltage/overcurrent conditions may enable such devices to be smaller, have less complex designs, and be more power efficient.

Further, by using active components to suppress lightning transients, the techniques of this disclosure is able to more effectively suppress lightning transients compared to techniques that use Transient Voltage Suppressor (TVS) diodes and capacitors, thereby enabling a device to effectively suppress lightning transients while occupying less space and having fewer components. Because an active lightning protection circuit is able to more effectively suppress transients compared to techniques that use TVS diodes and capacitors, a device that uses an active lightning protection circuit to protect components from damage due to overvoltage/over current conditions may receive better protection against transients without suffering from interference caused by capacitors used to suppress transients.

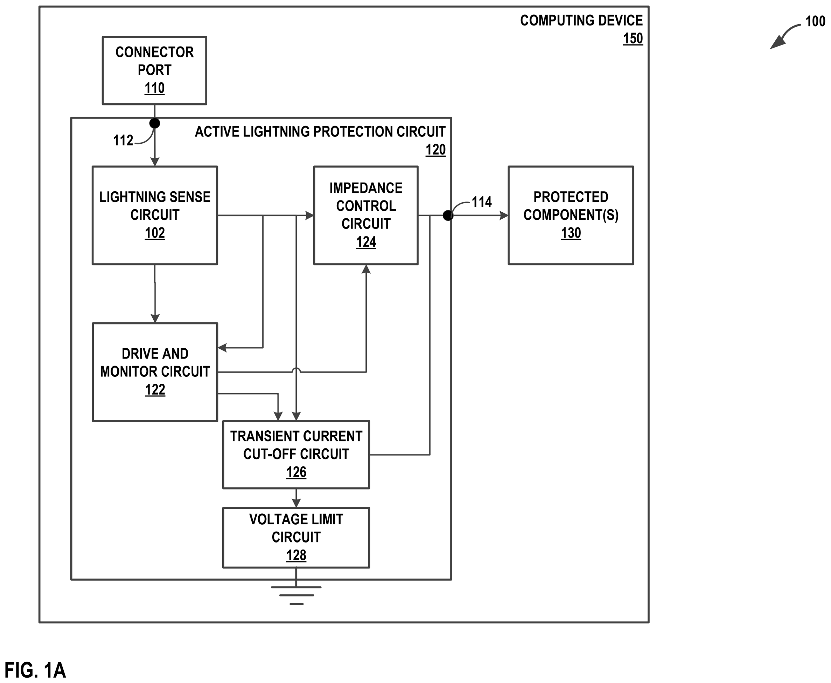

FIGS. 1A-1B are block diagrams of an example system 100 that includes an active lightning protection circuit 120. As shown in FIG. 1A, active lightning protection circuit 120 may be situated between connector port 110 and one or more protected components 130 of computing device 150 to protect one or more protected components 130 of computing device 150.

Computing device 150 may include, but is not limited to, portable or mobile devices such as mobile phones (including smart phones), laptop computers, desktop computers, tablet computers, routers, switches, wireless access points, and the like. One or more protected components may include any suitable electronic components of computing device 150, such as printed circuit boards, processors, microcontrollers, integrated circuits, memory, transceivers, crystals and oscillators, sensors, communication interfaces, and the like. Connector port 110 may be any suitable external interface of computing device 150, such as an Ethernet port, an Universal Serial Bus (USB) port, an audio jack, a video port, a power supply port, a coaxial port, a radio jack port, a serial port, and the like.

Active lightning protection circuit 120 includes input pin 112 that connects to connector port 110 and output pin 114 that connects to one or more protected components 130. Active lightning protection circuit 120 also includes lightning sense circuit 102, drive and monitor circuit 122, impedance control circuit 124, transient current cut-off circuit 126, and voltage limit circuit 128. Active lightning protection circuit 120 is an active circuit in that active lightning protection circuit 120 includes one or more active electronic components, such as transistors, as part of one or more of lightning sense circuit 102, drive and monitor circuit 122, impedance control circuit 124, transient current cut-off circuit 126, and voltage limit circuit 128.

Lightning sense circuit 102 is connected to connector port 110 via input pin 112. Lightning sense circuit 102 receives current from connector port 110 and is operable to sense a voltage level and/or a current level at connector port 110, such as via use of a sense resistor in lightning sense circuit 102.

Lightning sense circuit 102 connects to impedance control circuit 124 and transient current cut-off circuit 126. Impedance control circuit 124is operable to present a low impedance path between lightning sense circuit 102 and output pin 114 for current flowing towards one or more protected components 130, and transient current cut-off circuit 126 is operable to present a high impedance path between lightning sense circuit 102 and output pin 114 for current flowing towards one or more protected components 130.

When lightning sense circuit 102 senses that the current level of the current at connector port 110 is indicative of a normal condition, such as when lightning sense circuit 102 does not detect a transient based on the current level of the current at connector port 110, active lightning protection circuit 120 turns ON impedance control circuit 124 to present a low impedance path between lightning sense circuit 102 and output pin 114 for current flowing towards one or more protected components 130 from connector port 110. Similarly, when connector port 110 experiences a transient, lightning sense circuit 102 may detect the transient in the current level of the current at connector port 110, and active lightning protection circuit 120 turns OFF impedance control circuit 124, and turns ON transient current cut-off circuit 126 to present a high impedance path between lightning sense circuit 102 and output pin 114 for current flowing towards one or more protected components 130 from connector port 110. To present a high impedance path, transient current cut-off circuit 126 may include one or more resistors that reduce the current flow to output pin 114. Further, transient current cut-off circuit 126 may be connected to voltage limit circuit 128, which may be in the form of a Zener diode, that clamps the voltage to one or more protected components 130 to a safe level for one or more protected components 130. Thus, turning ON transient current cut-off circuit 126 may also turn on voltage limit circuit 128 that clamps the voltage to a safe level.

To control switching between a low impedance path and a high impedance path, lightning sense circuit 102 connects to drive and monitor circuit 122 that is operable to switch ON and switch OFF impedance control circuit 124 and transient current cut-off circuit 126 based on the current level at connector port 110 sensed by lightning sense circuit 102. Drive and monitor circuit 122 connects to both impedance control circuit 124 and transient current cut-off circuit 126.

When lightning sense circuit 102 senses that the current level of the current at connector port 110 is indicative of a normal condition, lightning sense circuit 102 is operable to turn OFF drive and monitor circuit 122, which turns ON impedance control circuit 124 that provides the low impedance path between lightning sense circuit 102 and output pin 114 for current flowing towards one or more protected components 130 from connector port 110. When lightning sense circuit 102 senses that the current level of the current at connector port 110 is indicative of a transient, lightning sense circuit 102 is operable to turn ON drive and monitor circuit 122. When drive and monitor circuit 122 is turned ON, drive and monitor circuit 122 is operable to, based on the current level sensed at connector port 110 by lightning sense circuit 102 that is indicative of a transient, turn OFF impedance control circuit 124 and turn ON transient current cut-off circuit 126.

By turning OFF impedance control circuit 124, drive and monitor circuit 122 turns OFF the low impedance path for current flowing towards one or more protected components 130 from connector port 110. By turning ON transient current cut-off circuit 126, drive and monitor circuit 122 enables transient current cut-off circuit 126 to present the high impedance path for current flowing towards one or more protected components 130 from connector port 110.

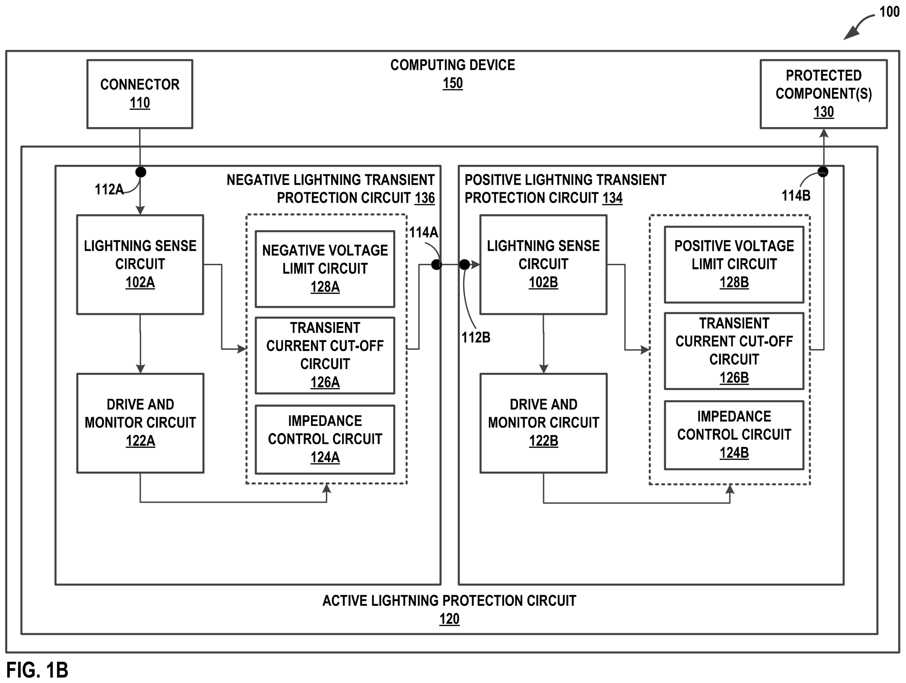

As shown in FIG. 1B, active lightning protection circuit 120 situated between connector port 110 and one or more protected components 130 of computing device 150 may include positive lightning transient protection circuit 134 and negative lightning transient protection circuit 136. Positive lightning transient protection circuit 134 is operable to protect one or more protected components 130 from positive transients at connector port 110, and negative lightning transient protection circuit 136 is operable to protect one or more protected components 130 from negative transients at connector port 110.

Negative lightning transient protection circuit 136 includes input pin 112A and output pin 114A. Similarly, positive lightning transient protection circuit 134 includes input pin 112B and output pin 114B. In the example of FIG. 1B, input pin 112A of negative lightning transient protection circuit 136 connects to connector port 110, and output pin 114A of negative lightning transient protection circuit 136 connects to input pin 112B of positive lightning transient protection circuit 134. Output pin 114B of positive lightning transient protection circuit 134 connects to one or more protected components 130. As such, current from connector port 110 may flow into negative lightning transient protection circuit 136, from negative lightning transient protection circuit 136 to positive lightning transient protection circuit 134, and from positive lightning transient protection circuit 134 to one or more protected components 130. In other examples, negative lightning transient protection circuit 136 and positive lightning transient protection circuit 134 may be configured so that current from connector port 110 may flow into positive lightning transient protection circuit 134, from positive lightning transient protection circuit 134 to negative lightning transient protection circuit 136, and from negative lightning transient protection circuit 136 to one or more protected components 130.

Negative lightning transient protection circuit 136 and positive lightning transient protection circuit 134 each operate similarly to active lightning protection circuit 120 as described in FIG. 1A. Negative lightning transient protection circuit 136 includes lightning sense circuit 102A, drive and monitor circuit 122A, impedance control circuit 124A, transient current cut-off circuit 126A, and negative voltage limit circuit 128A. Lightning sense circuit 102A is similar to lightning sense circuit 102 shown in FIG. 1A. Drive and monitor circuit 122A is similar drive and monitor circuit 122 shown in FIG. 1A. Impedance control circuit 124A is similar to impedance control circuit 124 shown in FIG. 1A, Transient current cut-off circuit 126A is similar to transient current cut-off circuit 126 shown in FIG. 1A, and negative voltage limit circuit 128A is similar to voltage limit circuit 128 shown in FIG. 1A. Negative lightning transient protection circuit 136 is an active circuit in that negative lightning transient protection circuit 136 includes one or more active electronic components, such as transistors, as part of one or more of lightning sense circuit 102A, drive and monitor circuit 122A, impedance control circuit 124A, transient current cut-off circuit 126A, and/or negative voltage limit circuit 128A.

Lightning sense circuit 102A is connected to connector port 110 via input pin 112A. Lightning sense circuit 102A receives current from connector port 110 and is operable to sense a current level at connector port 110, such as via use of a sense resistor in lightning sense circuit 102A.

Lightning sense circuit 102A connects to impedance control circuit 124A, transient current cut-off circuit 126A, and negative voltage limit circuit 128A. Impedance control circuit 124A is operable to present a low impedance path between lightning sense circuit 102A and output pin 114A for current flowing towards one or more protected components 130 (e.g., via positive lightning transient protection circuit 134). Transient current cut-off circuit 126A is operable to present a high impedance path between lightning sense circuit 102A and output pin 114A for current flowing towards one or more protected components 130. Negative voltage limit circuit 128A is operable to clamp the voltage at output pin 114A. to a safe level.

When lightning sense circuit 102A senses that the current level of the current at connector port 110 is indicative of a normal condition, such as when lightning sense circuit 102A does not detect a negative transient based on the current level of the current at connector port 110, negative lightning transient protection circuit 136 turns ON impedance control circuit 124A to present a low impedance path between lightning sense circuit 102A and output pin 114A for current flowing towards one or more protected components 130 from connector port 110. Similarly, when connector port 110 experiences a negative transient, lightning sense circuit 102A may detect the negative transient in the current level of the current at connector port 110, and negative lightning transient protection circuit 136 turns OFF impedance control circuit 124A. Lightning sense circuit 102A may therefore turn ON transient current cut-off circuit 126A to present a high impedance path between lightning sense circuit 102A and output pin 114A for current flowing towards one or more protected components 130 from connector port 110, which may also cause negative voltage limit circuit 128A to clamp the voltage at output pin 114A. To present a high impedance path, transient current cut-off circuit 126A may include one or more high-value resistors that reduce the current flow to output pin 114A and/or negative voltage limit circuit 128A may clamp the voltage to output pin 114A to a safe level for one or more protected components 130.

To control switching between a low impedance path and a high impedance path, lightning sense circuit 102A connects to drive and monitor circuit 122A that is operable to switch ON and switch OFF impedance control circuit 124A, transient current cut-off circuit 126A, and negative voltage limit circuit 128A based on the current level at connector port 110 sensed by lightning sense circuit 102A. Drive and monitor circuit 122A connects to impedance control circuit 124A, transient current cut-off circuit 126A, and negative voltage limit circuit 128A.

When lightning sense circuit 102A senses that the current level of the current at connector port 110 is indicative of a normal condition, lightning sense circuit 102A is operable to turn OFF drive and monitor circuit 122A, which turns ON drive and monitor circuit 122A that provides the low impedance path between lightning sense circuit 102A and output pin 114A for current flowing towards one or more protected components 130 from connector port 110. When lightning sense circuit 102A senses that the current level of the current at connector port 110 is indicative of a negative transient, lightning sense circuit 102A is operable to turn ON drive and monitor circuit 122A. When drive and monitor circuit 122A is turned ON, drive and monitor circuit 122A is operable to, based on the current level sensed at connector port 110 by lightning sense circuit 102A that is indicative of a negative transient, turn OFF impedance control circuit 124A and turn ON transient current cut-off circuit 126A.

By turning OFF impedance control circuit 124A, drive and monitor circuit 122A turns OFF the low impedance path for current flowing towards one or more protected components 130 from connector port 110. By turning ON transient current cut-off circuit 126A, drive and monitor circuit 122A enables transient current cut-off circuit 126A to present the high impedance path for current flowing towards one or more protected components 130 from connector port 110 and for negative voltage limit circuit 128A to clamp the voltage to output pin 114A to a safe level for one or more protected components 130.

Positive lightning transient protection circuit 134 includes lightning sense circuit 102B, drive and monitor circuit 122B, impedance control circuit 124B, transient current cut-off circuit 126B, and positive voltage limit circuit 128B. Lightning sense circuit 102B is similar to lightning sense circuit 102 shown in FIG. 1A. Drive and monitor circuit 122B is similar to that of drive and monitor circuit 122 shown in FIG. 1A. Impedance control circuit 124B is similar to impedance control circuit 124 shown in FIG. 1A. Transient current cut-off circuit 126B is similar to impedance control circuit 124 shown in FIG. 1A, and positive voltage limit circuit 128B is similar to voltage limit circuit 128 shown in FIG. 1A. Positive lightning transient protection circuit 134 is an active circuit in that positive lightning transient protection circuit 134 includes one or more active electronic components, such as transistors, as part of one or more of lightning sense circuit 102B, drive and monitor circuit 122B, impedance control circuit 124B, transient current cut-off circuit 126B, and positive voltage limit circuit 128B.

Lightning sense circuit 102B is connected to connector port 110 via negative lightning transient protection circuit 136 and input pin 112B. Lightning sense circuit 102B receives current from connector port 110 via negative lightning transient protection circuit 136 and input pin 112B and is operable to sense a current level at connector port 110, such as via use of a sense resistor in lightning sense circuit 102B.

Lightning sense circuit 102B connects to impedance control circuit 124B, transient current cut-off circuit 126B, and positive voltage limit circuit 128B. Impedance control circuit 124B is operable to present a low impedance path between lightning sense circuit 102B and output pin 114B for current flowing towards one or more protected components 130. Transient current cut-off circuit 126B is operable to present a high impedance path between lightning sense circuit 102B and output pin 114B for current flowing towards one or more protected components 130. Positive voltage limit circuit 128B is operable to clamp the voltage at output pin 114B. to a safe level.

When lightning sense circuit 102B senses that the current level of the current at connector port 110 is indicative of a normal condition, such as when lightning sense circuit 102B does not detect a positive transient at input pin 112B based on the current level of the current at connector port 110, positive lightning transient protection circuit 134 turns ON impedance control circuit 124B to present a low impedance path between lightning sense circuit 102B and output pin 114B for current flowing towards one or more protected components 130 from connector port 110. Similarly, when connector port 110 experiences a positive transient, lightning sense circuit 102B may detect the positive transient in the current level of the current at connector port 110, and positive lightning transient protection circuit 134 turns OFF drive and monitor circuit 122B. Lightning sense circuit 102B may therefore transient current cut-off circuit 126B to present a high impedance path between lightning sense circuit 102B and output pin 114B for current flowing towards one or more protected components 130 from connector port 110, which may also cause positive voltage limit circuit 128B to clamp the voltage at output pin 114B. To present a high impedance path, transient current cut-off circuit 126B may include one or more high-value resistors that reduce the current flow to output pin 114B and/or positive voltage limit circuit 128B may clamp the voltage to output pin 114B to a safe level for one or more protected components 130.

To control switching between a low impedance path and a high impedance path, lightning sense circuit 102B connects to drive and monitor circuit 122B that is operable to switch ON and switch OFF impedance control circuit 124B, transient current cut-off circuit 126B, and positive voltage limit circuit 128B based on the current level at connector port 110 sensed by lightning sense circuit 102B. Drive and monitor circuit 122B connects to impedance control circuit 124B, transient current cut-off circuit 126B, and positive voltage limit circuit 128B. When lightning sense circuit 102B senses that the current level of the current at input pin 112B is indicative of a normal condition, lightning sense circuit 102B is operable to turn OFF drive and monitor circuit 122B, which turns ON impedance control circuit 124B that provides the low impedance path between lightning sense circuit 102B and output pin 114B for current flowing towards one or more protected components 130 from connector port 110. When lightning sense circuit 102B senses that the current level of the current at input pin 112B is indicative of a positive transient, lightning sense circuit 102B is operable to turn ON drive and monitor circuit 122B. When drive and monitor circuit 122B is turned ON, drive and monitor circuit 122B is operable to, based on the current level sensed at connector port 110 by lightning sense circuit 102B that is indicative of a positive transient, turn OFF impedance control circuit 124B and turn ON transient current cut-off circuit 126B.

By turning OFF impedance control circuit 124B, drive and monitor circuit 122B turns OFF the low impedance path for current flowing towards one or more protected components 130 from input pin 112B. By turning ON transient current cut-off circuit 126B, drive and monitor circuit 122B enables transient current cut-off circuit 126B to present the high impedance path for current flowing towards one or more protected components 130 from connector port 110 and for positive voltage limit circuit 128B to clamp the voltage to output pin 114B to a safe level for one or more protected components 130.

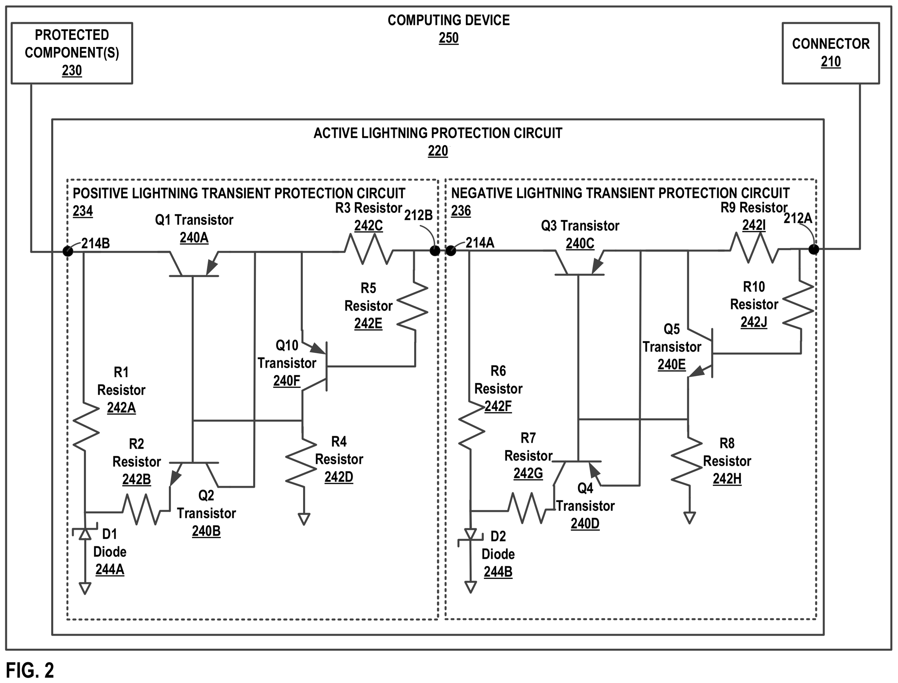

FIG. 2 is a circuit diagram of an active lightning protection circuit 220. Lightning protection circuit 220 is an example of active lightning protection circuit 120 shown in FIGS. 1A-1B.

As shown in FIG. 2, active lightning protection circuit 220 connects to connector port 210 and one or more protected elements 230 of computing device 250 to protect one or more protected elements 230 against lightning transients at connector port 210. Computing device is an example of computing device 150 of FIGS. 1A-1B, one or more protected elements 230 is an example of one or more protected components 130 of FIGS. 1A-1B, and connector port 210 is an example of connector port 110 of FIGS. 1A and 1B.

Active lightning protection circuit 220 includes positive lightning transient protection circuit 234 and negative lightning transient protection circuit 236. Positive lightning transient protection circuit 234 is an example of positive lightning transient protection circuit 134 of FIG. 1B, and negative lightning transient protection circuit 236 is an example of negative lightning transient protection circuit 136 of FIG. 1B. Negative lightning transient protection circuit 236 includes input pin 212A and output pin 214A. Positive lightning transient protection circuit 234 includes input pin 212B and output pin 214B. Input pin 212A of negative lightning transient protection circuit 236 is connected to connector port 210. Output pin 214A of negative lightning transient protection circuit 236 is connected to input pin 212B of positive lightning transient protection circuit 234. Output pin 214B of positive lightning transient protection circuit 234 is connected to one or more protected elements 230.

Negative lightning transient protection circuit 236 is operable to detect a negative lightning transient at connector port 210 and, in response, suppress the voltage/current at output pin 214A to a safe level for one or more protected elements 230. When there is a positive lightning transient at connector port 210, negative lightning transient protection circuit 236 may not suppress the positive lightning transient, such that the positive lightning transient may exist at output pin 214A. Positive lightning transient protection circuit 234 may detect the positive lightning transient at input pin 212B of positive lightning transient protection circuit 234 and may, in response, suppress the voltage at output pin 214B to a safe level for one or more protected elements 230.

Negative lightning transient protection circuit 236 includes R9 sense resistor 242I and R10 resistor 242J both connected to input pin 212A. In some examples, R9 sense resistor 242I may have a resistance of 10 milliohms while R10 resistor 242J may have a resistance of 1 kilohms. R9 sense resistor 242I also connects to the emitter of Q3 transistor 240C, the collector of Q5 transistor 240E, and the emitter of Q4 transistor 240D. R10 resistor 242J also connects to the base of Q5 transistor 240E. R9 sense resistor 242I and R10 resistor 242J may, together, be an example of lightning sense circuit 102A of FIG. 1B.

Q5 transistor 240E is a NPN transistor. The base of Q5 transistor 240E is connected to R10 resistor 242J. The collector of Q5 transistor 240E is connected to R9 sense resistor 242I. The emitter of Q5 transistor 240E is connected to R8 pull-down resistor 242H, the base of Q3 transistor 240C, and the base of Q4 transistor 240D. Q5 transistor 240E and R8 pull-down resistor 242H may, together be an example of drive and monitor circuit 122 of FIG. 1A or drive and monitor circuit 122Aof FIG. 1B.

Q3 transistor 240C is a PNP transistor. Q3 transistor 240C is situated between R9 sense resistor 242I and output pin 214A. The emitter of Q3 transistor 240C is connected to R9 sense resistor 242I. The base of Q3 transistor 240C is connected to the emitter of Q5 transistor 240E. The collector of Q3 transistor 240C is connected to output pin 214A. Q3 transistor 240C may be an example of impedance control circuit 124 of FIG. 1A or impedance control circuit 124A of FIG. 1B.

Q4 transistor 240D is a PNP resistor. The base of Q4 transistor 240D is connected to the emitter of Q5 transistor 240E. The emitter of Q4 transistor 240D is connected to R9 sense resistor 242I. The collector of Q4 transistor 240D is connected to R7 resistor 242G. R7 resistor 242G and R6 resistor 242F are connected in series between the collector of Q4 transistor 240D and output pin 214A. R7 resistor 242G is also connected to D2 Zener diode 244B. Q4 transistor 240D, R7 resistor 242G, and R6 resistor 242F may, together, be an example of transient current cut-off circuit 126 of FIG. 1A or transient current cut-off circuit 126A of FIG. 1B, while D2 Zener diode 244B may be an example of voltage limit circuit 128 of FIG. 1A or negative voltage limit circuit 128A of FIG. 1B.

In negative lightning transient protection circuit 236, during normal operation (i.e., when there is not an occurrence of a negative transient), R10 resistor 242J biases Q5 transistor 240E to remain OFF. As such, no current flows through R8 resistor 242H, resulting in a potential difference of 0V across R8 resistor 242H. Q5 transistor 240E being OFF causes the voltage difference between the base and the emitter of Q3 transistor 240C to turn ON Q3 transistor 240C, to pass current received by negative lightning transient protection circuit 236 to output pin 214A and to one or more protected elements 230 via positive lightning transient protection circuit 234.

When a negative lightning transient occurs, R9 sense resistor 242I senses the negative lightning transient current. The voltage drop across R9 sense resistor 242I may drive and turn ON Q5 transistor 240E. Turning ON Q5 transistor 240E may cause voltage to build up across R8 pull-down resistor 242H, which may cause Q3 transistor 240C to turn OFF. Turning OFF Q3 transistor 240C breaks the low impedance path to protect one or more protected elements 230.

With Q3 transistor 240C being turned OFF, Q5 transistor 240E being turned ON may pull the base of Q4 transistor 240D low, and may thereby turn ON Q4 transistor 240D. Q4 transistor 240D being turned ON provides a high impedance path for the current through R6 resistor 242F and R7 resistor 242G, thereby protecting one or more protected elements 230 from the transient. In addition, D2 Zener diode 244D also clamps the voltage at the output to a safe level (e.g., less than 10 Volts) for one or more protected elements 230, such as by shunting excess current away from output pin 214B.

Once the negative transit passes and the voltage levels return to normal, R9 resistor 242I no longer generates a significant voltage drop, thereby causing Q5 transistor 240E to turn OFF. When Q5 transistor 240E turns OFF, Q4 transistor 240D also turns OFF and Q3 transistor 240C is turned ON, restoring the low impedance path to one or more protected elements 230.

Positive lightning transient protection circuit 234 includes R3 sense resistor 242C and R5 resistor 242E both connected to input pin 212B. In some examples, R3 sense resistor 242C may have a resistance of 10 milliohms while R5 resistor 242E may have a resistance of 1 kilohms. R3 sense resistor 242C also connects to the emitter of Q10 transistor 240F, the emitter of Q1 transistor 240A, and the collector of Q2 transistor 240B. R5 resistor 242E also connects to the base of Q10 transistor 240F. R3 sense resistor 242C and R5 resistor 242E may, together, be an example of lightning sense circuit 102 of FIG. 1A or lightning sense circuit 102B of FIG. 1B.

Q10 transistor 240F is a PNP transistor. The base of Q10 transistor 240F is connected to R5 resistor 242E. The emitter of Q10 transistor 240F is connected to R3 sense transistor. The collector of Q10 transistor 240F is connected to R4 pull-down resistor 242D, the base of Q1 transistor 240A, and the base of Q2 transistor 240B. Q10 transistor 240F and R4 pull-down resistor 242D may, together, be an example of drive and monitor circuit 122 of FIG. 1A or an example of drive and monitor circuit 122B of FIG. 1B.

Q1 transistor 240A is a PNP transistor. Q1 transistor 240A is situated between R3 sense resistor 242C and output pin 214B. The emitter of Q1 transistor 240A is connected to R3 sense resistor 242C. The base of Q1 transistor 240A is connected to the collector of Q10 transistor 240F. The collector of Q1 transistor 240A is connected to output pin 214B. Q1 transistor 240A may be an example of impedance control circuit 124 of FIG. 1A or an example of impedance control circuit 124B of FIG. 1B.

Q2 transistor 240B is a NPN transistor. The base of Q2 transistor 240B is connected to the collector of Q10 transistor 240F. The collector of Q2 transistor 240B is connected to R3 sense resistor 242C. The emitter of Q2 transistor 240B is connected to R2 resistor 242B. R2 resistor 242B and R1 resistor 242A are connected in series between the emitter of Q2 transistor 240B and output pin 214B. In some examples, Q2 transistor 240B, R2 resistor 242B, and R1 resistor 242A may, together, be an example of transient current cut-off circuit 126 of FIG. 1A or transient current cut-off circuit 126B of FIG. 1B, and D1 Zener diode 244A may be an example of voltage limit circuit 128 of FIG. 1A or positive voltage limit circuit 128B of FIG. 1B.

In positive transient protection circuit 234, during normal operation (i.e., when there is not an occurrence of a positive transient), the voltage difference between the base and the emitter of Q10 transistor 240F, due to R3 sense resistor 242C and R5 resistor 242E, is not large enough for Q10 transistor 240F to turn ON, and thus Q10 transistor 240F is OFF. Q10 transistor 240F being OFF causes the voltage difference between the base and the emitter of Q1 transistor 240A to be large enough to cause Q1 transistor 240A to turn ON, to pass current received at input pin 212B by positive lightning transient protection circuit 234 to one or more protected elements 230.

When a positive lightning transient occurs, R3 sense resistor 242C senses the increased current, which may create a voltage drop across R3 sense resistor 242C. This voltage drop lowers the base voltage of Q10 transistor 240F relative to the emitter of Q10 transistor 240F, and thereby turns Q10 transistor 240F ON.

Turning on Q10 transistor 240F causes voltage to builds up across R4 pull-down resistor 242D. The voltage across R4 pull-down resistor 242D raises the voltage at the base of Q1 transistor 240A and causes Q1 transistor 240A to turn OFF. Turning OFF Q1 transistor 240A breaks the low impedance path to one or more protected elements 230.

With Q1 transistor 240A being turned OFF, the voltage across R4 pull-down resistor 242D raises the voltage at the base of Q2 transistor 240B and thereby turns ON Q2 transistor 240B. The Q2 transistor 240B being turned ON provides a high impedance path for the current to one or more protected elements 230 through R2 resistor 242B and R1 resistor 242A, thereby protecting one or more protected elements 230 from the positive transient. In addition, D1 Zener diode 244A also clamps the voltage at output to a safe level (e.g., less than 10 Volts) for one or more protected elements 230, such as by shunting excess current away from output pin 214B.

Once the positive transit passes and the voltage levels return to normal, R3 resistor 242C no longer generates a significant voltage drop, thereby causing Q10 transistor 240F to turn OFF. When Q10 transistor 240F turns OFF, Q2 transistor 240B also turns OFF and Q1 transistor 240A is turned ON, restoring the low impedance path to one or more protected elements 230.

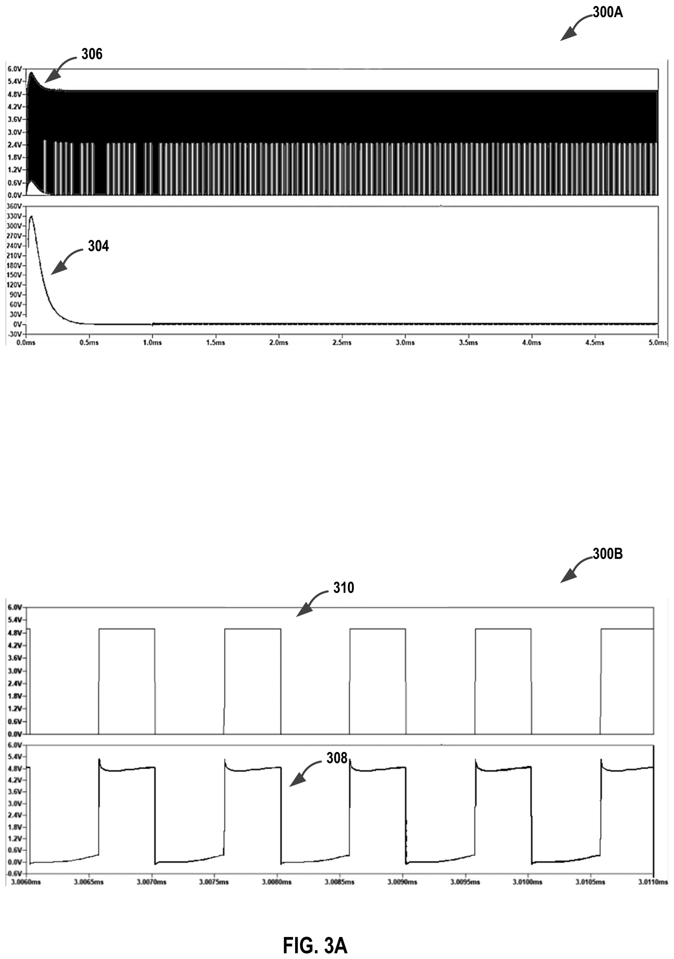

FIG. 3A-3C illustrate handling of lightning transients by a lightning protection circuit. FIGS. 3A-3C are described with respect to FIGS. 1A-1B and FIG. 2.

As shown in FIG. 3A, graph 300A illustrates a lightning waveform 304 injected at connector port 210 and a resulting output voltage waveform 306 of the voltage at the output (e.g., output pin 214B) of lightning protection circuit 220 that is a result of suppressing lightning waveform 304. As can be seen, lightning waveform 304 is a waveform 5A level 3 waveform that includes a positive lightning transient in the form of a large spike in voltage that peaks at about 330V and a current spike of 330 Amperes, with the voltage level quickly decaying to near zero within about 1ms.

Lightning protection circuit 220 may handle the positive lightning transient in lightning waveform 304 so that, as shown in output voltage waveform 306, the output voltage of lightning protection circuit 220 is relatively stable at around 5V. As shown in output voltage waveform 306, the output voltage of lightning protection circuit 220 may briefly fluctuate near the start of output voltage waveform 306, but quickly stabilizes, which shows that lightning protection circuit 220 works well to quickly clamp the positive transient and to maintain the output voltage at a safe level for one or more protected elements 230, thereby protecting one or more protected elements 230 from the positive transient.

Graph 300B illustrates that after the lightning event illustrated in graph 300A, output voltage waveform 308 at connector port 210 is a periodic square waveform that exhibits a periodic ripple or oscillation, but without any large transients or sharp spikes. These small oscillations may be residual effects of the transient illustrated in graph 300A. Output voltage waveform 310 may correspondingly be a periodic square waveform. The clean transitions between high and low levels of output voltage waveform 310 may indicate that lightning protection circuit 220 has successfully protected one or more protected elements 230 from transients caused by the lightning event and has effectively restored normal operation.

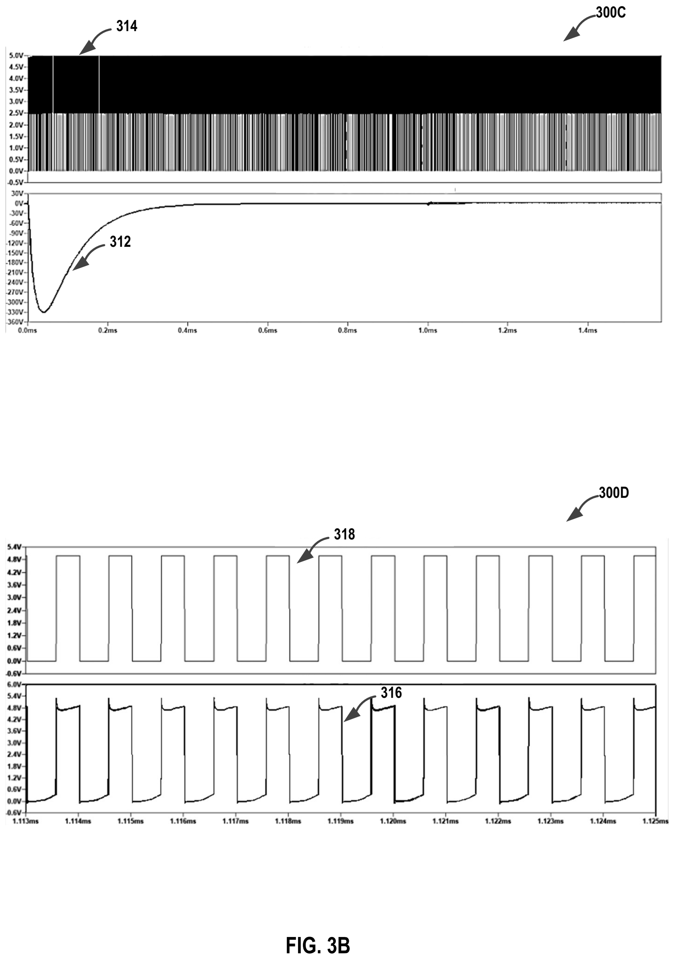

As shown in FIG. 3B, graph 300C illustrates lightning waveform 312 injected at connector port 210 and a resulting output voltage waveform 314 of the voltage at the output of lightning protection circuit 220 that is a result of suppressing lightning waveform 312. As can be seen, lightning waveform 312 is a waveform 5A level 3 inverse waveform per the DO-160 aerospace standard that includes a negative voltage in the form of a large drop in voltage to approximately -330V, with a smooth exponential recovery from the negative voltage that stabilizes within approximately 1.2ms.

Lightning protection circuit 220 may handle the negative transient in lightning waveform 312. As shown in output voltage waveform 314, while the output voltage of lightning protection circuit 220 may oscillate between 0V and 5V over time due to the negative transient, the output voltage does not exceed safe voltage levels of approximately 5V for one or more protected elements 230. Lightning protection circuit 220 therefore works well to keep the output voltage within safe voltage levels for one or more protected elements 230, thereby protecting one or more protected elements 230 from the negative transient.

Graph 300D illustrates that after the lightning event illustrated in graph 300C, input voltage waveform 316 at connector port 210 is a periodic square waveform that exhibits a periodic ripple or oscillation, but without any large transients or sharp spikes. These small oscillations may be residual effects of the transient illustrated in graph 300C. Output voltage waveform 318 may correspondingly be a periodic square waveform. The clean transitions between high and low levels of output voltage waveform 318 may indicate that lightning protection circuit 220 has successfully protected one or more protected elements 230 from transients caused by the lightning event and has effectively restored normal operation.

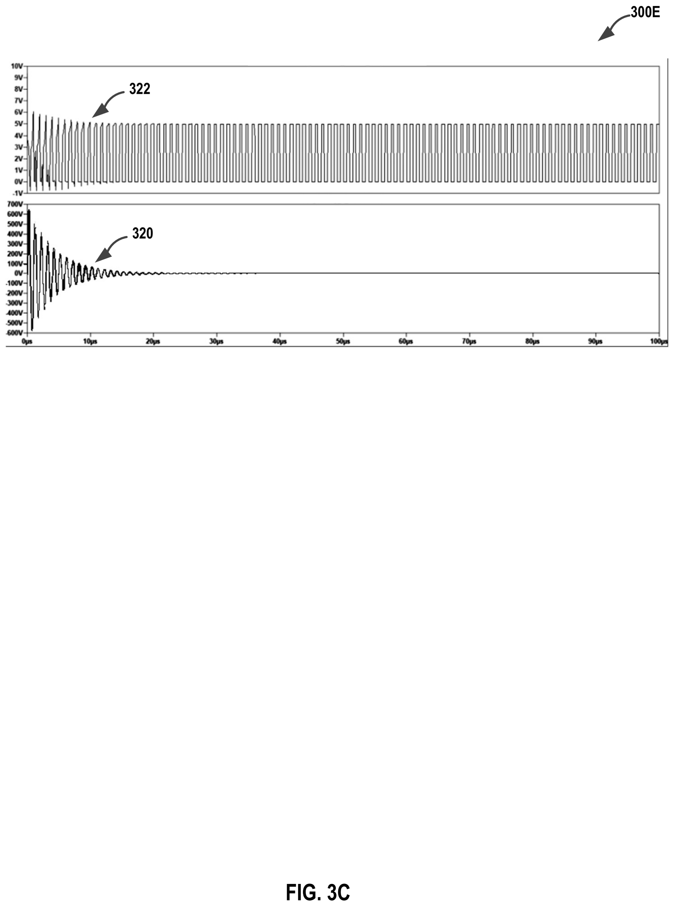

As shown in FIG. 3C, graph 300E illustrates lightning waveform 320 injected at connector port 210 and a resulting output voltage waveform 322 of the voltage at the output of lightning protection circuit 220 that is a result of suppressing lightning waveform 320. As can be seen, lightning waveform 320 is a waveform 3 level 3 waveform per the DO-160 aerospace standard that includes an oscillatory transient, in that lightning waveform 320 oscillates between positive transients up to approximately 600V and negative transients down to approximately -600V, while gradually decaying over time.

Lightning protection circuit 220 protects one or more protected elements 230 from the oscillatory transient in lightning waveform 320. As shown in FIG. 3C, output voltage waveform 322 oscillates between approximately 0V and approximately 5V, but does not exceed safe voltage levels for one or more protected elements 230. Lightning protection circuit 220 therefore effectively manages the oscillatory transient and works well to keep the output voltage within safe voltage levels for one or more protected elements 230, thereby protecting one or more protected elements 230 from the oscillatory transient.

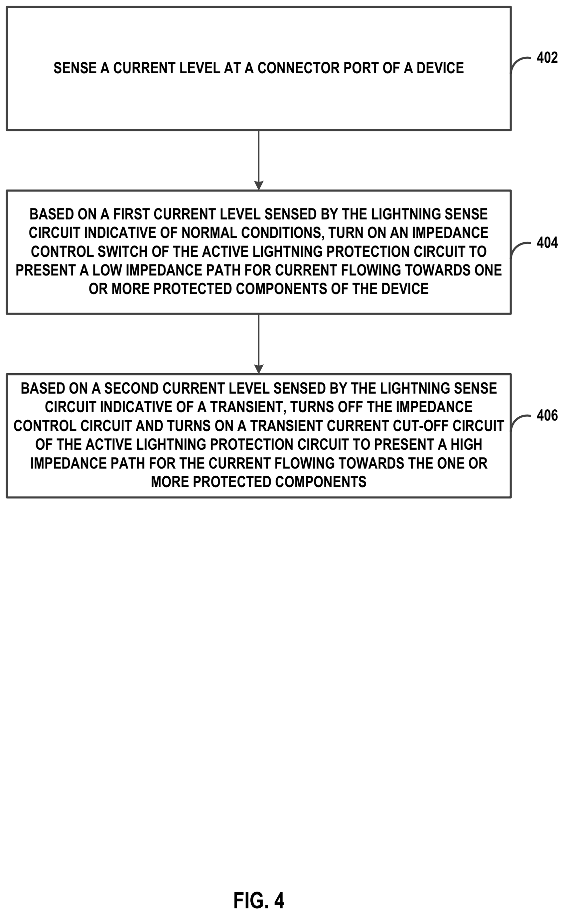

FIG. 4 is a flow chart illustrating example operations of an active lightning protection circuit. FIG. 4 is described with respect to FIGS. 1A-1B, FIG. 2, and FIGS. 3A-3C.

As shown in FIG. 4, a lightning sense circuit 102B of an active lightning protection circuit 120 may sense a current level at a connector port 110 of a device 150 (402).

Active lightning protection circuit 120 may, based on a first current level sensed by the lightning sense circuit 102B indicative of normal conditions, turn ON an impedance control circuit 124B of the active lightning protection circuit 120 to present a low impedance path for current flowing towards one or more protected components 130 of the device 150 (404).

A drive and monitor circuit 122B of the active lightning protection circuit 120 may, based on a second current level sensed by the lightning sense circuit 102B indicative of a transient, turns OFF the impedance control circuit 124B and turns ON a transient current cut-off circuit 126B of the active lightning protection circuit 120 to present a high impedance path for the current flowing towards the one or more protected components 130 (406).

In some examples, the drive and monitor circuit 122B includes a first PNP transistor 240F, and wherein the lightning sense circuit 102B is a sense resistor 242C operable to, in response to sensing the second current level indicative of the transient, develop a voltage drop across the sense resistor 242C that turns ON the drive and monitor circuit 122B. In some examples, the impedance control circuit 124B includes a second PNP transistor 240A, wherein the transient current cut-off circuit 126B includes a NPN transistor 240B, and wherein the drive and monitor circuit 122B is, when turned ON, operable to increase a base voltage of the second PNP transistor 240A to turn OFF the impedance control circuit 124B and to increase a base voltage of the NPN transistor 240B to turn ON the transient current cut-off circuit 126B.

In some examples, the transient current cut-off circuit 126B connects to a voltage limit circuit 128B, and wherein the voltage limit circuit 128B includes a Zener diode 244A operable to clamp voltage to the one or more protected components 130.

In some examples, the active lightning protection circuit 120 includes a positive lightning transient protection circuit 134 that includes the lightning sense circuit 102B, the impedance control circuit 124B, the transient current cut-off circuit 126B, and the drive and monitor circuit 122B, wherein the transient is a positive transient.

In some examples, the active lightning protection circuit 120 further includes a negative lightning transient protection circuit 136. The negative lightning transient protection circuit 136 includes a second lightning sense circuit 102A operable to sense the voltage level or the current level at the connector port 110 of the device 150, a second impedance control circuit 124A connected to the second lightning sense circuit 102A, wherein the second impedance control circuit 124A is operable to, based on a third current level sensed by the second lightning sense circuit 102A indicative of normal conditions, turn ON to present a second low impedance path for current flowing towards the one or more protected components 130 of the device 150, a second transient current cut-off circuit 126A operable to present a second high impedance path for the current flowing towards the protected components 130, and a second drive and monitor circuit 122A operable to, based on a fourth current level sensed at the connector port 110 indicative of a negative transient, turn ON to thereby turn OFF the second impedance control circuit 124A and turn ON the second transient current cut-off circuit 126A to present a second high impedance path for the current flowing towards the protected components 130.

In some examples, the second drive and monitor circuit 122A includes a second NPN transistor 240E, and wherein the second lightning sense circuit 102A is a second sense resistor 242I operable to, in response to sensing the third current level indicative of the negative transient, develop a voltage drop across the second sense resistor 242I that turns ON the second drive and monitor circuit 122A.

In some examples, the second impedance control circuit 124A includes a third PNP transistor 240C, wherein the second transient current cur-off circuit 126A includes a fourth PNP transistor 240D, and wherein the second drive and monitor circuit 122A is, when turned ON, operable to decrease a base voltage of the third PNP transistor 240C to turn OFF the second impedance control circuit 124A and to decrease a base voltage of the fourth PNP transistor 240D to turn ON the transient current cut-off circuit 126A.

In some examples, the second transient current cut-off circuit 126A connects to a second voltage limit circuit 128A, and wherein the second voltage limit circuit 128A includes a second Zener diode 244B operable to clamp voltage to the one or more protected components 130.

In some examples, an input of the negative lightning transient protection circuit 136 connects to the connector port 110, wherein an output 114A of the negative lightning transient protection circuit 136 connects to an input 112B of the positive lightning transient protection circuit 134, and wherein an output 114B of the positive lightning transient protection circuit 134 connects to the one or more protected components 130 of the device 150.

The techniques of this disclosure may also be described in the following clauses.

Clause 1. An active lightning protection circuit for protecting a device, the active lightning protection circuit comprising: a lightning sense circuit operable to sense a current level at a connector port of a device; an impedance control circuit connected to the lightning sense circuit, wherein the impedance control circuit is operable to, based on a first current level sensed by the lightning sense circuit indicative of normal conditions, turn ON to present a low impedance path for current flowing towards one or more protected components of the device; a transient current cut-off circuit operable to present a high impedance path for the current flowing towards the one or more protected components; and a drive and monitor circuit operable to, based on a second current level sensed by the lightning sense circuit indicative of a transient, turn ON, wherein turning ON the drive and monitor circuit turns OFF the impedance control circuit and turns ON the transient current cut-off circuit to present a high impedance path for the current flowing towards the one or more protected components.

Clause 2. The active lightning protection circuit of clause 1, wherein the drive and monitor circuit includes a first PNP transistor, and wherein the lightning sense circuit is a sense resistor operable to, in response to sensing the second current level indicative of the transient, develop a voltage drop across the sense resistor that turns ON the drive and monitor circuit.

Clause 3. The active lightning protection circuit of clause 2, wherein the impedance control circuit includes a second PNP transistor, wherein the transient current cut-off circuit includes a NPN transistor and wherein the drive and monitor circuit is, when turned ON, operable to increase a base voltage of the second PNP transistor to turn OFF the impedance control circuit and to increase a base voltage of the NPN transistor to turn ON the transient current cut-off circuit.

Clause 4. The active lightning protection circuit of any of clauses 1-3, wherein the transient current cut-off circuit connects to a voltage limit circuit, and wherein the voltage limit circuit includes a Zener diode operable to clamp voltage to the one or more protected components.

Clause 5. The active lightning protection circuit of any of clauses 1-4, further comprising: a positive transient protection circuit that includes the lightning sense circuit, the impedance control circuit, the transient current cut-off circuit, and the drive and monitor circuit, wherein the transient is a positive transient.

Clause 6. The active lightning protection circuit of clause 5, further comprising a negative transient protection circuit that includes: a second lightning sense circuit operable to sense the current level at the connector port of the device; a second impedance control circuit connected to the second lightning sense circuit, wherein the second impedance control circuit is operable to, based on a third current level sensed by the second lightning sense circuit indicative of normal conditions, turn ON to present a second low impedance path for current flowing towards the one or more protected components of the device; a second transient current cut-off circuit operable to present a second high impedance path for the current flowing towards the one or more protected components; and a second drive and monitor circuit operable to, based on a fourth current level sensed at the connector port indicative of a negative transient, turn ON to thereby turn OFF the second impedance control circuit and turn ON the second transient current cut-off circuit to present a second high impedance path for the current flowing towards the one or more protected components.

Clause 7. The active lightning protection circuit of clause 6, wherein the second drive and monitor circuit includes a second NPN transistor, and wherein the second lightning sense circuit is a second sense resistor operable to, in response to sensing the third current level indicative of the negative transient, develop a voltage drop across the second sense resistor that turns ON the second drive and monitor circuit.

Clause 8. The active lightning protection circuit of clause 7, wherein the second impedance control circuit includes a third PNP transistor, wherein the second transient current cur-off circuit includes a fourth PNP transistor, and wherein the second drive and monitor circuit is, when turned ON, operable to decrease a base voltage of the third PNP transistor to turn OFF the second impedance control circuit and to decrease a base voltage of the fourth PNP transistor to turn ON the transient current cut-off circuit.

Clause 9. The active lightning protection circuit of any of clauses 6-8, wherein the second transient current cut-off circuit connects to a second voltage limit circuit, and wherein the second voltage limit circuit includes a second Zener diode operable to clamp voltage to the one or more protected components.

Clause 10. The active lightning protection circuit of any of clauses 6-9, wherein an input of the negative transient protection circuit connects to the connector port, wherein an output of the negative transient protection circuit connects to an input of the positive transient protection circuit, and wherein an output of the positive transient protection circuit connects to the one or more protected components of the device.

Clause 11. A method comprising: sensing, by a lightning sense circuit of an active lightning protection circuit, a current level at a connector port of a device; based on a first current level sensed by the lightning sense circuit indicative of normal conditions, turning ON an impedance control circuit of the active lightning protection circuit to present a low impedance path for current flowing towards one or more protected components the device; and based on a second current level sensed by the lightning sense circuit indicative of a transient, turning OFF, by a drive and monitor circuit of the active lightning protection circuit, the impedance control circuit and turning ON, by the drive and monitor circuit, a transient current cut-off circuit of the active lightning protection circuit to present a high impedance path for the current flowing towards the one or more protected components.

Clause 12. The method of clause 11, wherein the drive and monitor circuit includes a first PNP transistor, and wherein the lightning sense circuit is a sense resistor, further comprising: in response to sensing the second current level indicative of the transient, developing, by the sense resistor, a voltage drop across the sense resistor that turns ON the drive and monitor circuit.

Clause 13. The method of clause 12, wherein the impedance control circuit includes a second PNP transistor, and wherein the transient current cut-off circuit includes a NPN transistor, further comprising: increasing by the drive and monitor circuit, when turned ON, a base voltage of the second PNP transistor to turn OFF the impedance control circuit; and increasing by the drive and monitor circuit, when turned ON, a base voltage of the NPN transistor to turn ON the transient current cut-off circuit.

Clause 14. The method of any of clauses 11-13, wherein turning ON the transient current cut-off circuit further comprises: clamping, by a Zener diode of a voltage limit circuit, voltage to the one or more protected components.

Clause 15. The method of any of clauses 11-14, wherein the active lightning protection circuit comprises a positive transient protection circuit that includes the lightning sense circuit, the impedance control circuit, the transient current cut-off circuit, and the drive and monitor circuit, wherein the transient is a positive transient.

Clause 16. The method of clause 15, wherein the active lightning protection circuit further comprises a negative transient protection circuit, further comprising: sensing, by a second lightning sense circuit of the negative transient protection circuit, the current level at the connector port of the device; based on a third current level sensed by the second lightning sense circuit indicative of normal conditions, turning ON a second impedance control circuit of the negative transient protection circuit to present a second low impedance path for current flowing towards one or more protected components the device; and based on a fourth current level sensed at the connector port indicative of a negative transient, turning OFF, by a second drive and monitor circuit of the negative transient protection circuit, the second impedance control circuit and turning ON, by the second drive and monitor circuit, a second transient current cut-off circuit to present a second high impedance path for the current flowing towards the one or more protected components.

Clause 17. The method of clause 16, wherein the second drive and monitor circuit includes a second NPN transistor, and wherein the second lightning sense circuit is a second sense resistor, further comprising: in response to sensing the third current level indicative of the negative transient, developing, by the second sense resistor, a voltage drop across the second sense resistor that turns ON the second drive and monitor circuit.

Clause 18. The method of clause 17, wherein the second impedance control circuit includes a third PNP transistor, wherein the second transient current cut-off circuit includes a fourth PNP transistor further comprising: decreasing, by the second drive and monitor circuit, when turned ON, a base voltage of the third PNP transistor to turn OFF the second impedance control circuit; and decreasing, by the second drive and monitor circuit, when turned ON, a base voltage of the fourth PNP transistor to turn ON the second transient current cut-off circuit.

Clause 19. The method of any of clauses 16-18, wherein turning ON the second transient current cut-off circuit further comprises: clamping, by a second Zener diode of a second voltage limit circuit, voltage to the one or more protected components.

Clause 20. The method of any of clauses 16-19, wherein an input of the negative transient protection circuit connects to the connector port, wherein an output of the negative transient protection circuit connects to an input of the positive transient protection circuit, and wherein an output of the positive transient protection circuit connects to the one or more protected components of the device.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of intraoperative hardware units, including one or more processors as described above, in conjunction with suitable software and/or firmware.

It is to be recognized that, depending on the example, certain acts or events of any of the techniques described herein may be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one example may be used with another example to yield a still further example. Thus, it is intended that the present disclosure covers such modifications and variations as come within the scope of the appended claims and their equivalents.

Various examples of the disclosure have been described. These and other examples are within the scope of the following claims.

## Claims

1. An active lightning protection circuit for protecting a device, the active lightning protection circuit comprising:
a lightning sense circuit operable to sense a current level at a connector port of a device;
an impedance control circuit connected to the lightning sense circuit, wherein the impedance control circuit is operable to, based on a first current level sensed by the lightning sense circuit indicative of normal conditions, turn ON to present a low impedance path for current flowing towards one or more protected components of the device;
a transient current cut-off circuit operable to present a high impedance path for the current flowing towards the one or more protected components; and
a drive and monitor circuit operable to, based on a second current level sensed by the lightning sense circuit indicative of a transient, turn ON, wherein turning ON the drive and monitor circuit turns OFF the impedance control circuit and turns ON the transient current cut-off circuit to present a high impedance path for the current flowing towards the one or more protected components.

2. The active lightning protection circuit of claim 1, wherein the drive and monitor circuit includes a first PNP transistor, and wherein the lightning sense circuit is a sense resistor operable to, in response to sensing the second current level indicative of the transient, develop a voltage drop across the sense resistor that turns ON the drive and monitor circuit.

3. The active lightning protection circuit of claim 2, wherein the impedance control circuit includes a second PNP transistor, wherein the transient current cut-off circuit includes a NPN transistor and wherein the drive and monitor circuit is, when turned ON, operable to increase a base voltage of the second PNP transistor to turn OFF the impedance control circuit and to increase a base voltage of the NPN transistor to turn ON the transient current cut-off circuit.

4. The active lightning protection circuit of any of claims 1-3, wherein the transient current cut-off circuit connects to a voltage limit circuit, and wherein the voltage limit circuit includes a Zener diode operable to clamp voltage to the one or more protected components.

5. The active lightning protection circuit of any of claims 1-4, further comprising:
a positive transient protection circuit that includes the lightning sense circuit, the impedance control circuit, the transient current cut-off circuit, and the drive and monitor circuit, wherein the transient is a positive transient.

6. The active lightning protection circuit of claim 5, further comprising a negative transient protection circuit that includes:
a second lightning sense circuit operable to sense the current level at the connector port of the device;
a second impedance control circuit connected to the second lightning sense circuit, wherein the second impedance control circuit is operable to, based on a third current level sensed by the second lightning sense circuit indicative of normal conditions, turn ON to present a second low impedance path for current flowing towards the one or more protected components of the device;
a second transient current cut-off circuit operable to present a second high impedance path for the current flowing towards the one or more protected components; and
a second drive and monitor circuit operable to, based on a fourth current level sensed at the connector port indicative of a negative transient, turn ON to thereby turn OFF the second impedance control circuit and turn ON the second transient current cut-off circuit to present a second high impedance path for the current flowing towards the one or more protected components.

7. The active lightning protection circuit of claim 6, wherein the second drive and monitor circuit includes a second NPN transistor, and wherein the second lightning sense circuit is a second sense resistor operable to, in response to sensing the third current level indicative of the negative transient, develop a voltage drop across the second sense resistor that turns ON the second drive and monitor circuit.

8. The active lightning protection circuit of claim 7, wherein the second impedance control circuit includes a third PNP transistor, wherein the second transient current cut-off circuit includes a fourth PNP transistor, and wherein the second drive and monitor circuit is, when turned ON, operable to decrease a base voltage of the third PNP transistor to turn OFF the second impedance control circuit and to decrease a base voltage of the fourth PNP transistor to turn ON the transient current cut-off circuit.

9. The active lightning protection circuit of any of claims 6-8, wherein the second transient current cut-off circuit connects to a second voltage limit circuit, and wherein the second voltage limit circuit includes a second Zener diode operable to clamp voltage to the one or more protected components.

10. The active lightning protection circuit of any of claims 6-9, wherein an input of the negative transient protection circuit connects to the connector port, wherein an output of the negative transient protection circuit connects to an input of the positive transient protection circuit, and wherein an output of the positive transient protection circuit connects to the one or more protected components of the device.

11. A method comprising:
sensing, by a lightning sense circuit of an active lightning protection circuit, a current level at a connector port of a device;
based on a first current level sensed by the lightning sense circuit indicative of normal conditions, turning ON an impedance control circuit of the active lightning protection circuit to present a low impedance path for current flowing towards one or more protected components the device; and
based on a second current level sensed by the lightning sense circuit indicative of a transient, turning OFF, by a drive and monitor circuit of the active lightning protection circuit, the impedance control circuit and turning ON, by the drive and monitor circuit, a transient current cut-off circuit of the active lightning protection circuit to present a high impedance path for the current flowing towards the one or more protected components.

12. The method of claim 11, wherein the drive and monitor circuit includes a first PNP transistor, and wherein the lightning sense circuit is a sense resistor, further comprising:
in response to sensing the second current level indicative of the transient, developing, by the sense resistor, a voltage drop across the sense resistor that turns ON the drive and monitor circuit.

13. The method of claim 12, wherein the impedance control circuit includes a second PNP transistor, and wherein the transient current cut-off circuit includes a NPN transistor, further comprising:
increasing by the drive and monitor circuit, when turned ON, a base voltage of the second PNP transistor to turn OFF the impedance control circuit; and
increasing by the drive and monitor circuit, when turned ON, a base voltage of the NPN transistor to turn ON the transient current cut-off circuit.

14. The method of claim 11, wherein the active lightning protection circuit comprises a positive transient protection circuit that includes the lightning sense circuit, the impedance control circuit, the transient current cut-off circuit, and the drive and monitor circuit, wherein the transient is a positive transient.

15. The method of claim 14, wherein the active lightning protection circuit further comprises a negative transient protection circuit, further comprising:
sensing, by a second lightning sense circuit of the negative transient protection circuit, the current level at the connector port of the device;
based on a third current level sensed by the second lightning sense circuit indicative of normal conditions, turning ON a second impedance control circuit of the negative transient protection circuit to present a second low impedance path for current flowing towards one or more protected components the device; and
based on a fourth current level sensed at the connector port indicative of a negative transient, turning OFF, by a second drive and monitor circuit of the negative transient protection circuit, the second impedance control circuit and turning ON, by the second drive and monitor circuit, a second transient current cut-off circuit to present a second high impedance path for the current flowing towards the one or more protected components.
